# EUROPEAN PATENT SPECIFICATION

(11) **EP 2 561 282 B1**
(45) Date of publication and mention of the grant of the patent: **27.09.2017**
(21) Application number: 11723208.2
(22) Date of filing: 20.04.2011
(51) Int. Cl.: F24D 3/08, F24D 19/10, F24D 11/00, F28D 20/00, F24D 17/00

(54) **AUXILIARY CIRCUIT FOR HEATING HEAT STORAGE TANKS**
HILFSKREISLAUF ZUR ERWÄRMUNG
CIRCUIT AUXILIAIRE POUR CHAUFFER DES RÉSERVOIRS DE STOCKAGE DE CHALEUR

(30) Priority: 21.04.2010 PT 10506110
(43) Date of publication of application: 27.02.2013
(73) Proprietor: J.prior - Fábrica De Plásticos. Lda., 3840-324 Ponte de Vagos (PT)
(72) Inventor: DE ANDREA LENCASTRE GODINHO, Luis Henrique, P-3840-324 Ponte de Vagos (PT)
(74) Representative: Canelas, Alberto Herminio
(86) International application number: PCT/PT2011/000012
(87) International publication number: WO 2011/133058

(56) References cited:
- EP-A1- 0 029 952
- US-A- 4 232 657
- US-A- 4 898 152

## Description

### Summary

The present invention relates to a specific association and assembly of functional elements as defined in claim 1.

### Background

Many and varied thermal systems for heating water, operating with according to different working principles, are known.

However, systems for heating water using renewable energy, such as solar thermal, and because these energies although reliable are not controllable, all have one thing in common: they have an accumulator tank to store heat collected during sunny hours to later release the energy when it is needed. The fact that solar energy is not controllable also obliges the use of auxiliary heaters - and / or support - to meet the needs of heat in the possible absence, or simple insufficiency, of solar energy. The most common solar thermal systems have a circuit that collects solar heat absorbed by collectors, carry it and pass it to a tank full of water at network pressure for domestic use through a heat exchanger, generally of the serpentine kind. If solar energy cannot meet the demand, there are usually in the tank electric heaters that maintain the desired temperature - making from it, in practice, a simple water heater.

Another version of solar thermal system, to which the present invention fits best, has a heat store tank at atmospheric pressure being the fluid in the heat storage tank that goes to the collectors to collect the heat and bring it back to the accumulator. In these systems is the water at mains pressure for domestic use that circulates inside a heat exchanger, usually with a serpentine shape and immersed in the heat storage fluid, where water is preheated while remaining in it until leaving for consumption. For the case of this pre-heating not being enough, there is an instant heater system that will provide the water with just enough heat for it to reach the desired temperature. If someone wants to force the raise of temperature in the heat storage tank there are usually extra support heating systems, such as boilers and electric heaters.

There are many documents relating to tanks for storing heat from renewable energy sources, particularly solar thermal, featuring the most varied configurations and following several principles.

Have special interest for this case those systems where it is proposed to pre-heat the domestic water in a heat exchanger immersed in the accumulator tank and, if the heat thus transferred to the domestic water at a given moment is not enough, the water goes at the exit through an auxiliary heating system which provides only the missing heat necessary to raise its temperature to the desired value. From the known more relevant systems to this case, we point out the ones described on the following patents:

The U.S. Patent 4898152 relates to a conventional "drainback" system, unpressurized in open circuit - "open loop"- with an internal heat exchanger coil immersed in the storage tank for heating domestic water, detailing aspects of heat transfer between the exchanger and the water returning from the panels. It also has an auxiliary heating system at the domestic water exit.

The U.S. Patent 4106692 relates to a heating system with an auxiliary boiler which supports not only the space heating but also maintains the temperature of the heat store. The domestic water is heated in a heat exchanger coil immersed in the accumulator tank and no post-heating thermal support is mentioned.

The U.S. Patent 4300536 describes a thermal storage system with an auxiliary boiler and heat exchangers, with solar thermal collectors included. The immersed heat exchanger for domestic water is used to preheat it and, afterwards, this water must pass through a heater that adds up the missing heat. The description of this system is very general with regard to domestic water and there is no reference to the possibility of an auxiliary heater for the domestic water being used to also warm the heat store.

The U.S. Patent 4324228 refers to a heat store for a solar thermal heating system without any heat support system. The domestic water is heated in an immersed cylindrical heat exchanger and, from there, it can simply move to another auxiliary tank with a conventional heating type heater, which will compensate for any lack of solar thermal energy.

The U.S. Patent 4727856 presents a heat storage tank for a solar thermal system with an inner heat exchanger to warm domestic water whose format is very similar to the storage tank used on the practical application example of this invention. This patent mainly refers aspects related to thermal efficiency resulting from the temperature stratification in the tank, direct consequence of the physics that governs our universe, without mentioning any specific type of auxiliary heating for the domestic water.

Finally, the U.S. Patent 5103802 presents a first heat storage tank which is very similar to the one in the present invention, with a heat exchanger immersed in a heat storage fluid that also runs through the solar circuit, and also an higher tank, called heating support tank, which is connected above and below the exchanger of the first tank so that, by thermosiphon effect, the heat is transferred to this tank containing auxiliary heating sources and never in reverse. There may be other means of support for heating the water coming out from this system but there is no provision for any return of those heating systems back to the heat exchanger.

The solution presented here, which is absent from the patents mentioned above, allows in an extremely simple way the auxiliary heating system for the domestic water, just by using the same heat exchanger, to also function as auxiliary heating source for the accumulator tank. In practice, this system allows a simple instantaneous heater, along with a solar heat storage tank, to become a boiler with the potential to also meet the "Domestic Hot Water" DHW and space heating needs of a home.

Thus, the instantaneous auxiliary heating can be used both to add to the domestic water, which is currently being consumed, just the missing heat for it to reach the desired temperature, and also to provide heat to the heat store through the same heat exchanger used for preheating the DHW.

In conventional systems, and in the absence of consumption, the water at the domestic circuit - plumbing, heat exchanger, valves and auxiliary heating - is at rest and is usually at this stage that it is being preheated in the exchanger immersed in the heat storage tank. Only the opening of a tap on the consumption side means that there is flow in this circuit, the output being offset by the entry from the water network in order to stabilize the pressure. A circuit with a non-return valve and a pump, which directly connects the output of the auxiliary heating - electric, gas, etc. - of the domestic water back into the heat exchanger allows, in the absence of consumption and by action of the pump, to have water flowing from the auxiliary heating system back to the heat exchanger. This flow, which can be activated when the storage tank temperature drops below a preset value, say 30 °C, will get hot water instead of tap water into the heat exchanger reversing thus the direction of heat flow in its walls, providing heat instead of getting heat from the fluid in the tank. This circuit can replace the auxiliary - or support - heating system to the fluid in the storage tank that usually exists in these systems.

### Brief description of drawings

The description that follows is based on the annexed drawings, which are not intended to be restrictive.

Figure drawing shows a conventional low pressure solar thermal system for room and domestic water heating, operating under the principle of "drainback" where the feedback circuit, the object of the invention, is represented with its hydraulic connections.

### Detailed description of invention

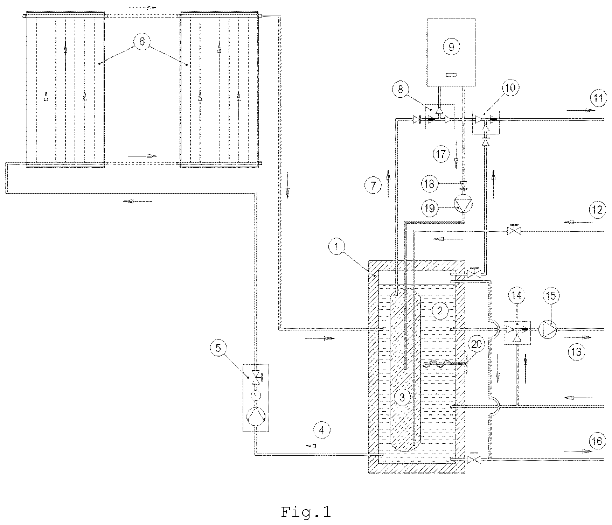

As shown in the attached Figure, the solar thermal system chosen to illustrate the installation of the feedback circuit in question is a typical low pressure system, i.e., with the battery and solar circuit operating at atmospheric pressure, comprising:
- Solar circuit (4) with its pumping station (5) whose function is to promote the circulation of fluid through the solar collectors (6);
- Heat Storage **circuit** composed of a thermally insulated tank (1) containing a fluid - which in this particular case may simply be pure water - with its connections to other circuits, network (12), drain (16) and any auxiliary heating systems **(9)** - such as boilers, electric heaters (20) - and where an immersed heat exchanger (3) in the form of cylindrical tank can be found and is part of a,
- "Domestic Hot Water" (DHW) circuit, or simply DHW circuit, where the heat exchanger (3) holds the drinking water at network pressure (12) that is normally there to be pre-heated until a tap on the output (11) is opened. The flow in this circuit makes the water in the heat exchanger **(3)**, before leaving the system, to first run through the auxiliary heating (9) to collect the amount of heat that is eventually needed for the water to reach the desired temperature. The circuit shown in the drawing also contains a thermostat directing valve (8) that, depending on the temperature of the water coming from the heat exchanger **(3)**, decides whether it needs to go through the auxiliary heating (9) or whether, instead, is already hot enough and can go directly to the output - but not before passing through a thermostatic mixing valve (10) that tempers it with tap water (12) if it is too hot.
- "Room Heating" circuit (13) which is designed to feed low temperature room heating systems - 28 °C to 30 °C - such as floor heating or forced circulation convectors. In addition to the circulation pump (15), this system usually has also a thermostatic mixing valve (14) that allows tempering the water coming out of the heat store with water returning from the heating circuit.

The Figure also represents another circuit (17), designated here as "Auxiliary Heating Circuit", which is the subject of this patent and which connects the output of the auxiliary heating (9) back to the heat exchanger (3). This connection has a non-return valve (18) to prevent the flow from the heat exchanger towards the auxiliary heating and has a pump (19) that promotes the flow through the circuit when the heat storage tank (2) drops below a certain temperature.

Thus, in the absence of DHW consumption and when the temperature of the fluid in the heat storage tank (2) is too low, the pump (19) is activated and the water in the exchanger (3) is made to flow through the auxiliary heating, (9) transporting heat collected there back through the auxiliary circuit (17) into the heat exchanger (3) heating it and making it to raise the temperature of the heat storage tank (2).

In such a solar thermal system, this simple circuit allows to solve the issue of both the auxiliary heating for domestic water and the support heating for space heating with one simple instant heater only, without the DHW being in contact with the fluid from the heat store.

The feedback created by the auxiliary heating circuit is controlled and programmable.

## Claims

1. Auxiliary heating circuit for thermal energy storage systems constituted by the association of a specific set of mechanical and electrical functional elements comprising
- a tubular structure,
- a heat storage tank (2),
- **an** auxiliary heating system (9),
- **an output (11) for consumption,**
- **a control means,**
- **a temperature sensing means in said heat storage tank (2) and**
- **an inlet (12) for water from the mains network characterized by**
- **a** non-return valve (18) and
- a circulation pump (19)
wherein the non-return valve (18) prevents the flow from the heat exchanger (3) towards the auxiliary heating **system** (9) and the pump (19) **is configured to promote** the flow through the circuit when the heat storage tank (2) drops below a certain temperature, and
**wherein the control means is configured so that in use** in the absence of consumption and by action of the pump (19), there is a water flow from the heat exchanger (3) through the auxiliary heating system (9) and back to the heat exchanger (3), with this flow, which **is** triggered when the temperature in the heat store **formed by said heat storage tank (2)** drops below a preset value, making hot water to enter the heat exchanger (3) instead of water at the mains temperature which changes the direction of the heat flux in its walls, giving away heat to the fluid in the storage tank instead of getting heat from it.

## Patentansprüche

1. Zusatzheizkreis für thermische Energiespeichersysteme, welcher aus der Zusammenstellung einer spezifischen Reihe von mechanischen und elektrischen funktionellen Elementen gebildet wird, der folgendes enthält:
- eine röhrenförmige Struktur,
- ein Tank zur Wärmespeicherung (2),
- **eine** Zusatzheizanlage (9),
- **ein Ausgang (11) für den Verbrauch,**
- **ein Steuermittel,**
- **ein Temperaturfühler in dem genannten Tank zur Wärmespeicherung (2) und**
- **ein Eingang (12) für Wasser von dem Leitungsnetz,** durch folgendes gekennzeichnet:
- **ein** Rückschlagsventil (18) und
- eine Umwälzpumpe (19),
worin das Rückschlagsventil (18) den Fluss von dem Wärmeaustauscher (3) zur Zusatzheiz**anlage** (9) verhindert und die Pumpe (19) **zur Förderung** des Durchflusses durch die Anlage **eingerichtet ist**, wenn der Tank zur Wärmespeicherung (2) unter eine bestimmte Temperatur sinkt, und
**worin das Steuermittel so eingerichtet ist, damit bei der Nutzung** und mangels des Verbrauchs und Einsatzes der Pumpe (19) ein Wasserfluss von dem Wärmeaustauscher (3) durch die Zusatzheizanlage (9) und zurück zum Wärmeaustauscher (3) vorhanden ist, mit diesem Fluss, der ausgelöst wird, wenn die Temperatur in dem Wärmespeicher, die durch den genannten **Tank zur Wärmespeicherung (2) entsteht,** unter einem voreingestellten Wert sinkt, und so warmes Wasser in den Wärmeaustauscher (3) eindringt, anstatt Wasser mit der Temperatur des Leitungsnetzes, was eine Änderung in der Richtung des Wärmeflusses in deren Wände verursacht, so wird die Flüssigkeit in dem Tank zur Speicherung erwärmt, anstatt, dass von diesem Wärme genommen wird.

## Revendications

1. Circuit auxiliaire de chauffage pour systèmes de stockage d'énergie thermique, constitué de l'association d'un ensemble spécifique d'éléments fonctionnels mécaniques et électriques comprenant :
- une structure tubulaire,
- un réservoir de stockage de chaleur (2),
- un système auxiliaire de chauffage (9),
- une sortie (11) de consommation,
- un moyen de contrôle,
- un moyen de détection de la température dans ledit réservoir de stockage de chaleur (2) et
- une entrée (12) d'eau du réseau principal **caractérisé par**
- un clapet anti-retour (18) et
- une pompe de circulation (19)
où le clapet anti-retour (18) empêche la circulation de l'eau de l'échangeur de chaleur (3) vers le système auxiliaire de chauffage (9) et la pompe (19) est configurée de façon à permettre à l'eau de circuler à travers le circuit lorsque la température dans le réservoir de stockage de chaleur (2) descend en-dessous d'une certaine valeur, et
où le moyen de contrôle est configuré de façon à ce que, lors de l'utilisation, en l'absence de consommation et par l'action de la pompe (19), l'eau circule de l'échangeur de chaleur (3) à travers le système auxiliaire de chauffage (9) et retourne à l'échangeur de chaleur (3), au moyen de cette circulation, qui est déclenchée lorsque la température de la réserve de chaleur formée par ledit réservoir de stockage de chaleur (2) descend en-dessous d'une valeur prédéterminée, en faisant en sorte que de l'eau chaude entre dans l'échangeur de chaleur (3) au lieu d'eau à la température du réseau principal, de sorte qu'il y a une inversion du sens du flux de chaleur dans ses parois, ce qui chauffe le fluide dans le réservoir de stockage au lieu d'être réchauffé par celui-ci.
